# EUROPÄISCHE PATENTANMELDUNG

(11) **EP 2 242 149 A1**
(43) Veröffentlichungstag der Anmeldung: **20.10.2010**
(21) Anmeldenummer: 10159864.7
(22) Anmeldetag: 14.04.2010
(51) Int. Cl.: H01R 13/703, H01R 13/52

(54) **Steckdose für eine mehrpolige Steckvorrichtung**

(30) Priorität: 14.04.2009 DE 202009005591 U
(71) Anmelder: Plastimat GmbH, 33378 Rheda-Wiedenbrück (DE)
(72) Erfinder: Jürgens, Hans-Georg, 33378 Rheda-Wiedenbrück (DE)
(74) Vertreter: Thun, Clemens

(57) **Zusammenfassung**

Eine Steckdose für eine mehrpolige Steckverbindung insbesondere für die elektrische Verbindung eines Kraftfahrzeuges mit einem Anhänger weist ein Dosengehäuse (10) und einen in dem Dosengehäuse aufgenommenen Kontakteinsatz (30) auf sowie einen Schalter (40), der durch ein Betätigungsglied (63) betätigbar ist, dessen Position beim Einstecken eines Steckers in die Dose verändert wird, wobei an der Innenwand (101) des Dosengehäuses zwischen den Enden des Kontakteinsatzes (40) für die Abstützung einer den Kontakteinsatz (40) umgebenden Dichtung (60) ein ringförmiger Innenbund (16) vorgesehen ist, der eine Durchbrechung (19) für das Betätigungsglied (63) aufweist, und wobei das Betätigungsglied (63) integral mit der Dichtung (60) ausgebildet ist.

## Beschreibung

Die Erfindung betrifft eine Steckdose für eine mehrpolige Steckvorrichtung und insbesondere eine Steckdose für die elektrische Verbindung zwischen einem Kraftfahrzeug und einem Kraftfahrzeuganhänger, wie sie im Oberbegriff des Schutzanspruches 1 angegeben ist.

Moderne Anhängerkupplungen sind schwenkbar an einem Kraftfahrzeug angeordnet, damit sie im Außerbetriebszustand sich unter dem Fahrzeug befinden und dadurch der optische Eindruck des Fahrzeugs nicht durch den Kupplungshaken beeinträchtigt wird. Der elektrische Anschluss der Anhänger erfolgt über eine Steckdose. Die Steckdosen nach der geltenden DIN 11446 und auch die Dosen nach der früheren Norm DIN 1724 besitzen eine Schraubverbindung mit einem Halteblech, mit dem sie an der Karosserie neben der Anhängerkupplung angebracht werden. Es ist die Forderung gestellt worden, die Steckdose in der schwenkbaren Anhängerkupplung unterzubringen, damit auch die Steckdose im Außerbetriebszustand der Kupplung nicht sichtbar ist und sich eine geschlossene, alle mechanischen und elektrischen Elemente umfassende Kupplungseinheit ergibt. Die herkömmlichen Steckdosen mit Schraubverbindung und Halteplatte sind hierfür nicht geeignet, da sie auf den Kupplungshaken aufgesetzt werden müssten und diesen dann sehr breit machen. Es sind Steckdosen vorgeschlagen worden, die im Kupplungshaken selbst untergebracht sind. Hierzu müssen die Abmessungen der Steckdose klein sein, desweiteren muss ein besonderer Schutz gegen Spritzwasser gegeben sein, da sich die Kupplung und damit die Dose im Außerbetriebszustand unter dem Fahrzeug und damit näher an der Fahrbahn befindet. Sie ist dort in viel höherem Maße dem Spritzwasser ausgesetzt als in der Betriebsstellung oberhalb der hinteren Stoßstange des Fahrzeugs.

Bei Steckdosen dieser Art gibt es die Forderung, dem Zugfahrzeug durch ein Signal mitzuteilen, dass der Stecker eines Anhängers in die Steckdose am Zugfahrzeug eingesteckt ist. Dieses Signal wird beispielsweise dazu verwendet, dass bei einem Anhängerbetrieb die Nebelschlussleuchten des Zugfahrzeugs abgeschaltet und stattdessen die Nebelschlussleuchten des Anhängers über die Anhängersteckverbindung angeschaltet werden.

Bei einer im Markt befindlichen Steckdose dieser Art, die in den Kugelhals einer Anhängerkupplung eingebaut werden kann, befindet sich der Mikroschalter in dem Zwischenraum zwischen dem Kontakteinsatz und der Innenwand des Dosengehäuses. Das Dosengehäuse besitzt innen einen umlaufenden Bund, der den Kontakteinsatz umgibt und der eine Dichtung trägt, die den Teil der Dose, in dem sich der Kabelabgang befindet, von der Einstecköffnung der Dose, in die der Stecker der Anhängerverbindung eingeführt wird, trennt. Der Mikroschalter befindet sich unterhalb der Dichtung in dem Raum des Kabelabgangs. Er wird durch einen kleinen Stößel betätigt, der in einer Aussparung des umlaufenden Bundes an der Innenwand des Gehäuses geführt wird und der zur Öffnungsstellung hin federbelastet ist, damit er im Ruhezustand den Mikroschalter nicht betätigen kann. Die Feder kann eine Drahtfeder sein, bei einer anderen Ausführung ist als Federelement ein elastisches Gummiteil vorgesehen. Beim Einstecken des Steckers drückt dieser mit seiner Vorderseite auf die Gummidichtung und diese wiederum gegen den Stößel, sodass der Mikroschalter beim Festmachen des Steckers betätigt wird.

Bei diesem Stand der Technik ist nachteilig, dass der Lauf des Stößels bei stark wechselnden Temperaturen behindert werden kann. So kann sich bei einer aus Metalldraht bestehenden Spiralfeder Kondenswasser zwischen den einzelnen Windungen ansammeln, das bei tiefen Temperaturen dann zu Eis wird und die Feder unbrauchbar macht. Bei einer Gummifeder führen tiefe Temperaturen zu einem Versteifen der Feder, sodass eine einwandfreie Rückstellung des Stößels nicht immer gewährleistet ist.

Aufgabe der Erfindung ist dementsprechend, eine eingangs angegebenen Dose mit einem Schalter, der bei Einstecken des Steckers betätigt wird, so zu gestalten, dass die Betätigung dieses Schalters wenig störanfällig ist.

Diese Aufgabe wird mit einer Dose nach dem Oberbegriff des Schutzanspruches 1 gelöst, die gemäß der Erfindung die im Kennzeichenteil des Anspruches aufgeführten Merkmale besitzt.

Weitere, vorteilhafte Ausgestaltungen der Erfindung ergeben sich aus den Unteransprüchen.

Im Folgenden wird die Erfindung anhand des in den Figuren dargestellten Ausführungsbeispiels beschrieben und näher erläutert.

### Es zeigen:

- FIGUR 1: eine Explosionsdarstellung der erfindungsgemäßen Dose;
- FIGUR 2: das Dosengehäuse mit abgenommener Kappe von der Einstecköffnung her gesehen;
- FIGUR 3: eine Ansicht des Dosengehäuses von der Kabelabgangsseite her gesehen
- FIGUR 4: die Dichtung von oben;
- FIGUR 5: die Dichtung von unten;
- FIGUR 6: eine Ansicht des Dosengehäuses mit eingesetzter Dichtung
- FIGUR 7: eine Außenansicht der zusammengesetzten Dose
- FIGUR 8: eine alternative Ausführungsform der Kappe auf der Kabelabgangsseite
- FIGUR 9: eine Außenansicht der Dose in der alternativen Ausführungsform

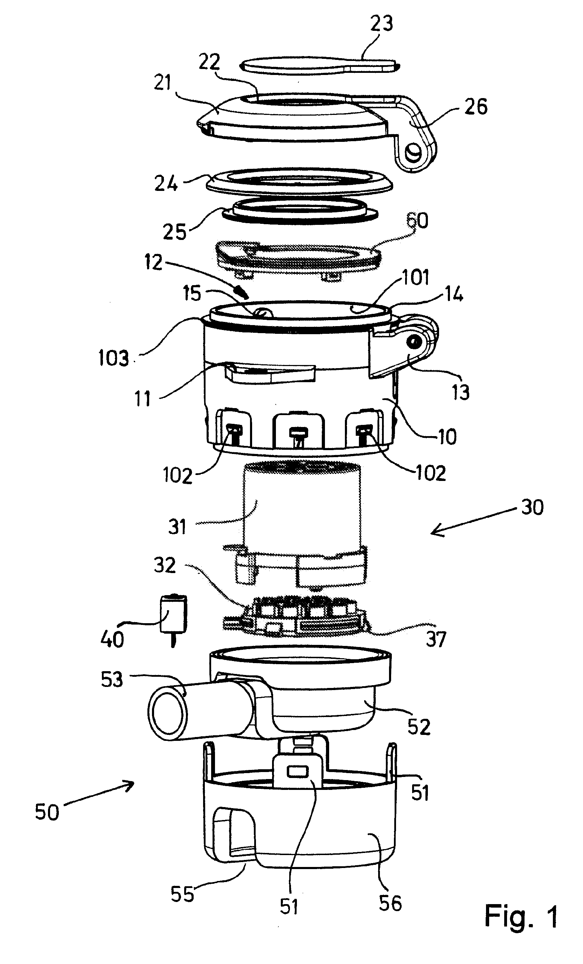

Entsprechend der FIGUR 1 besteht die erfindungsgemäße Dose aus einem Dosengehäuse (10). Das Dosengehäuse besitzt Befestigungsflansche (11) für die Montierung an dem Kugelhals einer Anhängerkupplung oder auch an einer Montageplatte des Fahrzeugs. Die Einstecköffnung (12) der Dose wird von einem Klappdeckel (20) verschlossen. Dieser Klappdeckel ist mit einem Arm (26) an Laschen (13) des Dosengehäuses schwenkbar befestigt. Der Klappdeckel umfasst einen Deckelkörper (21), der eine Vertiefung (22) für die Aufnahme eines Plättchens (23) besitzt, das das Logo des Fahrzeugherstellers trägt. Der Deckel besitzt weiter einen Deckelring (24) und eine Deckeldichtung (25). Diese Deckeldichtung (25) liegt bei geschlossenem Zustand des Deckels auf dem oberen Rand (14) der Dose auf und verschließt damit die Dosenöffnung. Das Dosengehäuse (10) besitzt drei drehsymmetrisch mit einem Winkel von 120° zueinander angeordnete Nocken (15), die in die Bajonett-Nuten des Steckers eingreifen, wenn dieser in die Dosenöffnung (12) eingeführt wird. Das Dosengehäuse besitzt an der Außenseite acht drehsymmetrisch angeordnete Rasthaken (102), an denen die Kappe (50) mit ihren Rastlaschen (51) verankert wird. In dem Dosengehäuse befindet sich der Kontakteinsatz (30), der eine Aussparung besitzt, in die der Mikroschalter (40) eingesetzt ist. Der Kontakteinsatz ist zweiteilig aufgebaut und besteht aus einem Kontaktaufsatz 31 und einer Trägerplatte 32, die nach Einsetzen der Kontakte mit dem Kontaktaufsatz verrastet wird. Diese Ausführungsart wird bei gedrehten Kontakten verwendet. Bei gerollten oder gekrimpten Kontakten wird ein einteiliger Kantakteinsatz verwendet. Am Kontakteinsatz (30) ist ein Mikroschalter (40) angeordnet, der beim Einstecken eines Steckers in die Dose betätigt und dazu verwendet wird, die Rücklichter oder Bremslichter des Zugfahrzeugs abzuschalten.

Die rückwärtige Seite der Dose wird von einer Kappe (50) verschlossen. Sie umfasst ein Kappengehäuse (56) und eine Kappendichtung (52), die für die seitliche Kabelabführung eine Tülle (53) aufweist. Diese Tülle (53) tritt durch eine Kabelabgangsüffnung (55) der Kappe aus.

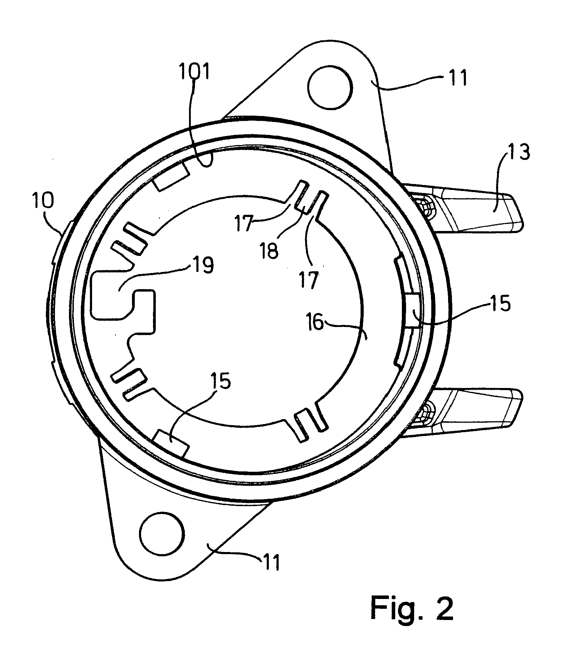

FIGUR 2 zeigt eine Ansicht des Dosengehäuses von der Einstecköffnung her gesehen. Auf der Außenseite der Dose ist ein umlaufender Wulst (29) vorgesehen, der im Außendurchmesser etwa 1mm größer ist als der umlaufende obere Rand, welcher die Auflagefläche für die Deckeldichtung bildet. An der Innenwand des Dosengehäuses ist ein radial nach innen vorspringender umlaufender Bund (16) vorgesehen, der mit einzelnen Einschnitten (17) für die Ausbildung von Zähnen (18) versehen ist. Diese Schlitze (17) und die Zähne (18) dienen zur Befestigung der auf dem Bund (16) aufliegenden Dichtung, die die Einstecköffnung des Dosengehäuses von dem kabelabgangsseitigen Teil dieses Gehäuses trennt. In diesem Bund (16) ist weiter eine Durchbrechung (19), die das in der Dichtung integrierte Betätigungsteil für den Mikroschalter aufnimmt und dafür eine Führung darstellt.

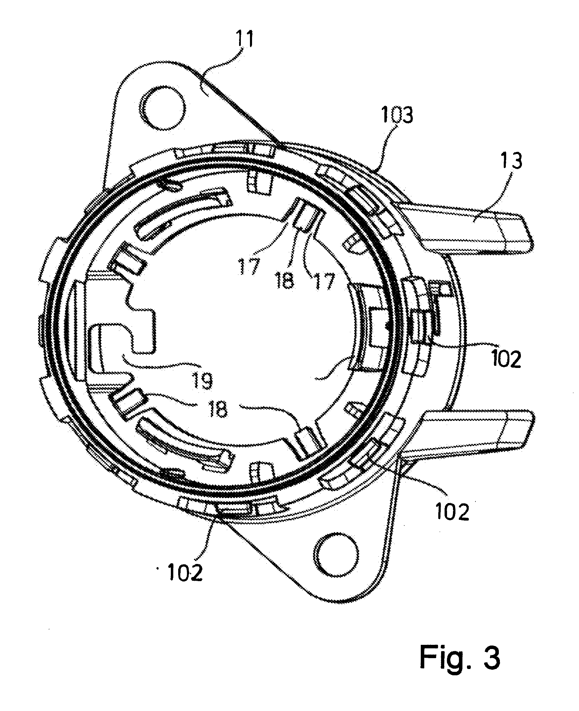

Die FIGUR 3 zeigt das Dosengehäuse von der Kabelabgangsseite her. An dem Bund (16) sind Rastlaschen (38) angebracht, die für die Befestigung des Kontakteinsatzes (30) dienen und an Rastnasen (37) des Kontakteinsatzes angreifen.

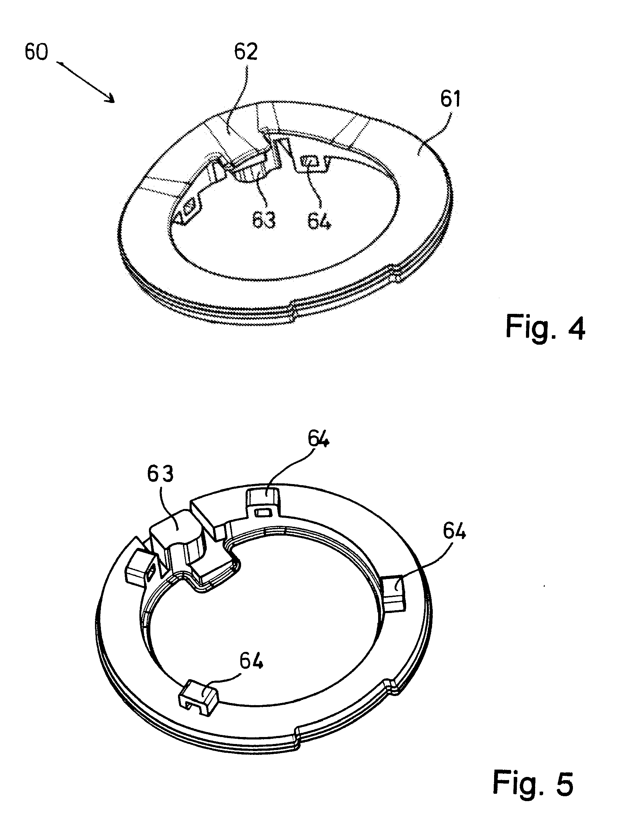

Die FIGUR 4 zeigt einen Blick auf die zur Dosenöffnung hin liegende Oberseite der Dichtung (60). Wird ein Stecker mit der Dose verbunden, so wird der Stecker beim Eindrehen des Bajonettverschlusses gegen die in der Figur 4 oben liegende Dichtfläche 61 gepresst. Diese Dichtfläche (61) ist im unbelasteten Zustand nicht eben, sondern sie besitzt einen sich nach oben vorwölbenden Bereich (62), in dem die Stärke der Dichtung etwas zunimmt. An der Unterseite dieses vorgewölbten Bereiches (62) ist ein Nocken (63) angebracht. Die Dichtung besitzt an ihrer Unterseite drei Befestigungsösen (64), in die im eingesetzten Zustand die Zähne (18) des Bundes (16) eingreifen und dadurch den Sitz der Dichtung sichern.

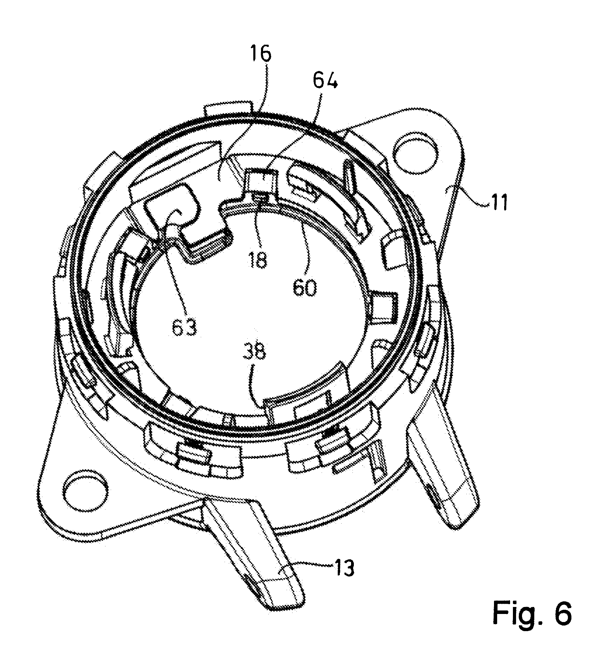

Figur 5 zeigt einen Blick auf die Unterseite der Dichtung, mit der sie auf dem Bund 16 aufliegt. Der Nocken (63) tritt in die Durchbrechung (19) des Bundes (16) ein und ist so bemessen, dass er im unbelasteten Zustand, d. h. dann, wenn kein Stecker in die Dose eingesetzt ist, mit der unteren Ebene des Bundes (16) in etwa fluchtet. Dieser Zustand ist in der FIGUR 6 dargestellt, die entsprechend der FIGUR 3 das Dosengehäuse von der Kabelabgangsseite her zeigt. Der Mikroschalter ist in der FIGUR 6 nicht sichtbar, er ist so angeordnet, dass sein Betätigungsteil dem Nocken (63) genau gegenüberliegt. Wird ein Stecker in das Dosengehäuse eingeführt und mit seinem Bajonettverschluss an den Nocken (15) verriegelt, so drückt das vordere Ende des Steckers gegen den vorgewölbten Bereich (62) der Dichtung und quetscht ihn gegen den Bund (16) sodass der Nocken (63) durch die Durchbrechung (19) nach unten hervortritt, dabei auf das Betätigungsteil des Mikroschalters (40) einwirkt und diesen in eine andere Schaltstellung bringt.

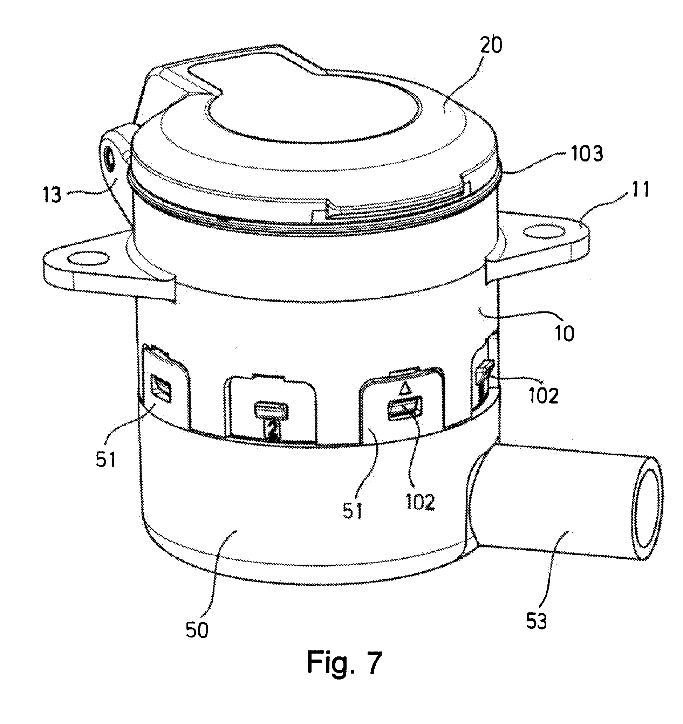

FIGUR 7 zeigt eine Außenansicht der zusammengesetzten Dose. Es ist erkennbar, dass der Wulst (29) am Gehäuse gerade soweit hervorsteht, dass der Überstand des Deckels über die Außenseite des Dosengehäuses abgedeckt und dadurch der Deckel vor der Einwirkung von Spritzwasser geschützt wird. Die Kappe (50) ist mit ihren vier Rastlaschen (51) an den Rastzähnen an der Außenseite der Dose befestigt. Da insgesamt acht Rastzähne vorhanden sind, gibt es acht mögliche Stellungen für den Kabelabgang (55). Die FIGUR 7 zeigt auch, dass der Schieber (54) den Bereich der Dichtung (52) oberhalb von der Tülle gegen ein Auftreffen von Spritzwasser schützt.

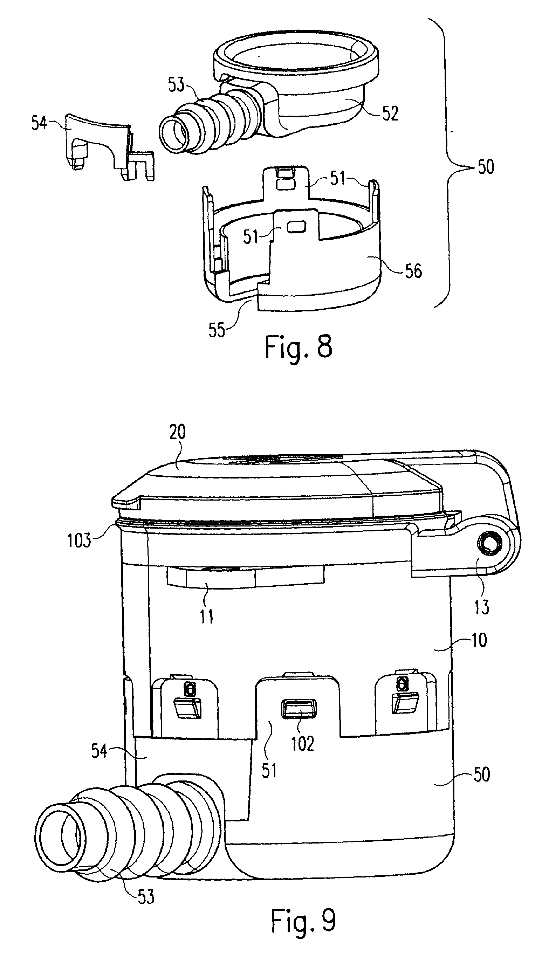

Die Figur 8 zeigt eine alternative Ausführungsform für die Kappe (59). Die Kabelabgangsüffnung (55) ist als ein die zylinderförmige Außenwand des Kappengehäuses (56) vollständig durchsetzenden Schlitz ausgebildet. Hiermit wird das Einsetzen Gummidichtung in die Kappe erleichtert, denn die Tülle (53) braucht nur noch von oben in den Schlitz eingeführt und nicht mehr durch eine Öffnung hindurch geführt zu werden. Da bei der Montage die Anschlusskabel durch die Tülle durchgesteckt sind, ist diese Ausführungsart bei dicken und steifen Anschlusskabeln von Vorteil. Damit nun die Kappendichtung (52) im Bereich der Kabelabgangsöffnung (55) von auftreffendem Spritzwasser nicht deformiert und dadurch zu einer Undichtigkeit entstehen kann, ist ein Schieber (54) vorgesehen, der nach dem Einsetzen der Kappendichtung (52 von oben her in entsprechende Nuten eingeführt wird, die an der Kappenwand ausgebildet sind. Der Schieber bildet dann einen festen Steg, der einen mechanischen Schutz für die weichelastische Kappendichtung (52) bietet. Figur 9 zeigt für diese Ausführungsform die Dose in zusammengesetztem Zustand.

### Bezugszeichenliste

- 10: Dosengehäuse
- 11: Befestigungsflansche
- 12: Einstecköffnung
- 13: Laschen
- 14: oberer Rand
- 15: Nocken für Bajonettverschluss
- 16: umlaufender Bund
- 17: Schlitze
- 18: Zähne
- 19: Ausnehmung
- 101: Innenseite des Dosengehäuses
- 102: Rastnocken
- 103: Wulst

- 20: Deckel
- 21: Deckelkörper
- 22: Vertiefung
- 23: Plättchen (mit Firmenlogo)
- 24: Deckelring
- 25: Deckeldichtung
- 26: Arm

- 30: Kontakteinsatz
- 31: Kontaktaufsatz
- 32: Trägerplatte
- 37: Rastnasen am Kontakteinsatz
- 38: Rastlaschen am Bund 16

- 40: Mikroschalter

- 50: Kappe
- 51: Rastlaschen
- 52: Dichtung
- 53: Tülle
- 54: Schieber
- 55: Kabelaustrittsöffnung
- 56: Kappengehäuse

- 60: Dichtung
- 61: Dichtfläche
- 62: vorgewölbter Bereich der Dichtfläche 61
- 63: Nocken
- 64: Befestigungsösen

## Patentansprüche

1. Steckdose für eine mehrpolige Steckverbindung insbesondere für die elektrische Verbindung eines Kraftfahrzeuges mit einem Anhänger, mit
einem Dosengehäuse (10) und einem in dem Dosengehäuse aufgenommenen Kontakteinsatz (30),
einem Schalter (40), der durch ein Betätigungsglied (63) betätigbar ist, dessen Position beim Einstecken eines Steckers in die Dose verändert wird,
wobei an der Innenwand (101) des Dosengehäuses zwischen den Enden des Kontakteinsatzes (40) für die Abstützung einer den Kontakteinsatz (40) umgebenden Dichtung (60) ein ringförmiger Innenbund (16) vorgesehen ist, der eine Durchbrechung (19) für das Betätigungsglied (63) aufweist,
**dadurch gekennzeichnet, dass** das Betätigungsglied (63) integral mit der Dichtung (60) ausgebildet ist.

2. Steckdose nach Anspruch 1,
**dadurch gekennzeichnet, dass** die Durchbrechung (19) als Führung für das Betätigungsglied (63) ausgebildet ist.

3. Steckdose nach Anspruch 1,
**dadurch gekennzeichnet, dass** die Einstecköffnung (12) der Dose mit einem Klappdeckel (20) versehen ist, und dass das Dosengehäuse (10) an der Außenseite der Einstecköffnung (12) einen umlaufenden Wulst (29) aufweist, dessen Außendurchmesser größer oder gleich dem Außendurchmesser des Klappdeckels (20) ist.

4. Steckdose nach einem der Ansprüche 1 bis 3,
**dadurch gekennzeichnet, dass** die Dose eine der Einstecköffnung (12) gegenüberliegende abnehmbare Kappe (50)aufweist, die mit einer seitlichen Kabelabgangsöffnung (55) versehen ist.

5. Steckdose nach Anspruch 4,
**dadurch gekennzeichnet, dass** das Dosengehäuse (10) acht drehsymmetrisch angeordnete Rastzähne (102) und die Kappe (50) vier dazu angepasste und drehsymmetrisch angeordnete Rastlaschen (51) aufweist.

6. Steckdose nach Anspruch 4 oder 5,
**dadurch gekennzeichnet, dass** die Kappe (50) eine hutförmige und mit einer seitlichen Tülle (53) versehene Gummidichtung (52) aufweist.

7. Steckdose nach einem der Ansprüche 4 bis 6,
**dadurch gekennzeichnet, dass** das Kappengehäuse (56) an der Kabelabgangsöffnung (55) einen herausnehmbaren Schieber (54) aufweist.
